# EUROPÄISCHE PATENTANMELDUNG

(11) **EP 4 799 822 A1**
(43) Veröffentlichungstag der Anmeldung: **02.09.2026**
(21) Anmeldenummer: 26160663.6
(22) Anmeldetag: 25.02.2026
(51) Int. Cl.: B42D 25/29, B42D 25/324, B42D 25/373, B42D 25/425, G02B 5/09, G02B 5/10

(54) **OPTISCH VARIABLES SICHERHEITSELEMENT, WERTDOKUMENT UND HERSTELLUNGSVERFAHREN**

(30) Priorität: 26.02.2025 DE 102025107278
(71) Anmelder: Giesecke+Devrient Currency Technology GmbH, 81677 München (DE)
(72) Erfinder: PINZEK, Simon, 83703 Gmund am Tegernsee (DE)
(74) Vertreter: Patentanwälte Geyer, Fehners & Partner mbB

(57) **Zusammenfassung**

Es ist ein optisch variables Sicherheitselement zur Absicherung von Sicherheitspapieren, Wertdokumenten, Wertgegenständen oder dergleichen vorgesehen, das aufweist: einen eine Grundebene definierenden Substratkörper und eine am Substratkörper ausgebildet oder angeordnete Mikrospiegelanordnung (19), die als zweidimensionales Array aus Mikrospiegeln (22, 24, 26) ausgebildet ist, die Pixel einer in Draufsicht auf den Substratkörper erkennbaren Darstellung (6, 8, 15, 17) bilden. Die Mikrospiegelanordnung (19) umfasst erste Mikrospiegel (26) und zweite Mikrospiegel (22, 24), wobei die ersten Mikrospiegel (26) ebene, zur Grundebene geneigte Spiegelflächen aufweisen und mindestens die zweiten Mikrospiegel (22, 24) jeweils eine zweiachsig gekrümmte Spiegelfläche umfassen.

## Beschreibung

Die Erfindung betrifft ein optisch variables Sicherheitselement zur Absicherung von Sicherheitspapieren, Wertdokumenten, Wertgegenständen oder dergleichen, das einen eine Grundebene definierenden Substratkörper und eine am Substratkörper ausgebildet oder angeordnete Mikrospiegelanordnung aufweist, die als zweidimensionales Array aus Mikrospiegeln ausgebildet ist, die Pixel einer in Draufsicht auf den Substratkörper erkennbaren Darstellung bilden. Die Mikrospiegelanordnung umfasst erste Mikrospiegel und zweite Mikrospiegel, wobei die ersten Mikrospiegel ebene, zur Grundebene geneigte Spiegelflächen aufweisen und mindestens die zweiten Mikrospiegel jeweils mehrere Teilspiegelflächen umfassen.

Zur Absicherung von Wertdokumenten, wie einer Banknote, einem Scheck, einer Kredit- oder sonstige Zahlungskarte, einer Ausweiskarte oder dergleichen werden seit langem folienbasierte Sicherheitselemente eingesetzt. Für derartige folienbasierte Sicherheitselemente werden seit Ende der 80er Jahre Prägehologramme verwendet, welche inzwischen sehr weit verbreitet sind und keine hohe Fälschungssicherheit mehr bieten können; sie werden deshalb zunehmend durch mikrooptische Systeme ersetzt.

Mikrooptische Systeme, wie beispielsweise Mikrospiegelanordnungen erlauben eine Überprüfung der Echtheit des Wertdokuments und erhöhen zugleich die Fälschungssicherheit, da sie selbst mit modernsten Kopiergeräten nicht reproduziert werden können. Mit den Mikrospiegelanordnungen lassen sich z.B. Laufeffekte umsetzen, die eine hohe optische Variabilität beim Kippen des Sicherheitselements aufweisen. Die Mikrospiegelanordnung kann dabei Mikrospiegel einer bestimmten Fläche, z.B. Quadrate mit den Abmessungen 20 µm x 20 µm, oder auch Rechtecke, bei denen eine Kante sehr viel größer ist als die andere, aufweisen. Durch unterschiedliche Ausrichtungen von Teilflächen innerhalb der Mikrospiegel können verschiedene optisch variable Effekte, wie Lauf-, Wölb-, oder 3D Paralaxe-Effekte erzeugt werden. Eine besondere Umsetzung dieser Effekte erzeugt Flip-Bilder aus zwei oder mehr solcher Effekte. Dabei sind die einzelnen Effekte in unterschiedlichen Ansichten jeweils unter unterschiedlichen Betrachtungswinkeln sichtbar, befinden sich aber flächenmäßig an der gleichen Stelle. Da Flip-Bilder nicht durch einfaches Drucken erzeugt werden können, bieten sie eine hohe Fälschungssicherheit.

Die beschriebenen Flip-Bilder können erzeugt werden, indem die Fläche, die die unterschiedlichen Effekte/Flip-Motive enthalten soll, in ineinander verschachtelte Pixelgruppen, die z.B. mit einer Schachbrett-Verschachtelung verschachtelt sind und bei unterschiedlichen Ansichten aus unterschiedlichen Betrachtungswinkeln sichtbar sind, unterteilt wird, wobei der erste Effekt, also z.B. ein Wölbeffekt, die "weißen" Felder belegt und der zweite Effekt, also z.B. ein Laufeffekt oder ein anderer Wölbeffekt, die "schwarzen" Felder. Idealerweise unterscheiden sich die beiden Flip-Motive deutlich in ihrer Form, sodass es für das menschliche Auge einfach ist, die beiden Motive zu unterscheiden und so den Flip bei einem Wechsel des Betrachtungswinkels, also einem Wechsel der Ansicht zu erkennen. Die ineinander verschachtelten Pixelgruppen sorgen dafür, dass man ein Sicherheitselement mit Flip-Effekt des Motivs in vier Flächenbereiche unterteilen kann: Ein erster Flächenbereich zeigt die Motive beider Flip-Ansichten (natürlich je nach Betrachtungswinkel), in einem zweiten Flächenbereich ist das Motiv der ersten Flip-Ansicht vorhanden, das der zweiten aber nicht, in einem dritten Flächenbereich ist das Motiv der zweiten Flip-Ansicht vorhanden, das der ersten aber nicht und in einem vierten Flächenbereich ist keines der Motive der beiden Flip-Ansichten vorhanden. Immer wenn in einem Flächenbereich ein Effekt/Motiv einer Flip-Ansicht nicht vorhanden ist oder beide Effekte/Motive nicht vorhanden sind, muss dieser Flächenbereich entsprechend mit einem Hintergrundeffekt belegt werden. Dieser Hintergrundeffekt kann Flip-Hintergrund genannt werden, der einen ähnlichen Blickwinkelbereich wie die Flip-Motive aufweist, um eine klare Trennung der beiden Effekte /Motive zu begünstigen. Bei einer unklaren Trennung würden sogenannte Geisterbilder auftreten, was bedeutet, dass man z.B. einen Schatten vom ersten Motiv sieht, während eigentlich nur das zweite Motiv sichtbar sein sollte. Ein ähnlicher Blickwinkelbereich weicht an einer oder beiden Grenzen um höchstens 20° ab, bevorzugt um höchstens 10° und besonders bevorzugt um höchstens 5°.

Natürlich kann die Trennschärfe der Flip-Ansichten dahingehend begrenzt sein, dass die Blickwinkelbereiche überlappen können, so dass ein Übergangsbereich besteht, in dem beim Kippen vorübergehend beide Flip-Ansichten überlagert sichtbar sind.

Die beschriebenen Hintergrundeffekte für Flip-Motive werden üblicherweise über sogenannte verrauschte Spiegel als Mikrospiegelanordnungen erzeugt. Verrauschte Spiegel haben ebene Spiegeloberflächen, deren Ausrichtung im vorgegebenen Blickwinkelbereich zufällig und verschachtelt erfolgt. Alle Pixel eines verschachtelten Flächenbereichs der Mikrospiegelanordnung (im Beispiel der Schachbrett-Verschachtelung z.B. alle weißen Felder), welche mit dem Hintergrundeffekt versehen werden, weisen den gleichen oder einen ähnlichen Blickwinkelbereich auf, wie der eigentliche Flip-Effekt bzw. das eigentliche Flip-Motiv in diesem Bereich. Dadurch hat der Hintergrund auf makroskopischer Ebene eine gleichmäßige Helligkeit, die einzelnen Pixel des Hintergrunds erscheinen jedoch unterschiedlich hell, was zu einer griesligen Optik führt. Des Weiteren sind Mikrospiegelanordnungen bekannt, die in einer ersten Richtung Teilflächen mit einer konstanten Neigung aufweisen und in einer zweiten dazu senkrechten Richtung Teilflächen mit einer gekrümmten Oberfläche, d.h. mit einem Neigungsverlauf aufweisen. Den bekannten Mikrospiegelanordnungen ist es gemein, dass wenn diese für einen sogenannten Flip-Hintergrund verwendet werden, dieser eine verrauschte/grieselige Optik erhält, und der Hintergrundeffekt damit eine ungleichmäßige Helligkeit besitzt.

Es liegt der Erfindung die Aufgabe zugrunde, ein gattungsgemäßes Sicherheitselement anzugeben, das die Nachteile des Standes der Technik vermeidet und das insbesondere einen nicht strukturierten Bereich einer Darstellung mit gleichmäßiger Helligkeit und damit einen attraktiven optischen Effekt erzeugt. Ebenfalls soll ein entsprechendes Wertdokument und ein Verfahren zur Herstellung des Sicherheitselements bereitgestellt werden.

Die Erfindung ist in den unabhängigen Ansprüchen definiert. Weiterbildungen sind Gegenstand der abhängigen Ansprüche.

Es ist ein optisch variables Sicherheitselement zur Absicherung von Sicherheitspapieren, Wertdokumenten und anderen Wertgegenständen vorgesehen. Das Sicherheitselement weist einen Substratkörper auf, der eine Grundebene durch seine Oberfläche definiert. Als Substratkörper können Polymersubstrate, wie beispielsweise PET-Substrate, Papiersubstrate, oder kombinierte Papier- und Polymersubstrate eingesetzt werden.

Auf dem Substratkörper ist eine Mikrospiegelanordnung aufgebracht. Die Mikrospiegelanordnung kann entweder in eine Dielektrikumschicht als Mikrofacettenanordnung geprägt und anschließend mit einer Reflexionsschicht metallisiert werden, oder sie wird gänzlich aus einer Metallschicht gebildet, ohne dass eine Dielektrikumschicht notwendig ist. Als Metalle für die Reflexionsschicht bzw. die Metallschicht eignen sich besonders Al, Ag, Au, Ni, Fe, Cu, Wo oder Cr und Legierungen von diesen Metallen. Auch eine Multilayer-Beschichtung, wie beispielsweise eine Colourshift-Beschichtung (z.B. Absorber, Dielektrikum, Reflektor), oder ein Mehrschichtsystem aus Dielektrika mit verschiedenen Brechungsindizes, bei denen sich hohe und niedrige Brechungsindizes abwechseln (z.B. ZnS-SiO₂-ZnS) kann als Reflexionsschicht verwendet werden.

Die Mikrospiegelanordnung umfasst ein zweidimensionales Array aus ersten und zweiten Mikrospiegeln, die Pixel einer in Draufsicht auf den Substratkörper erkennbaren Darstellung bilden. Bevorzugt zeigt das zweidimensionale Array aus Mikrospiegeln eine erste Ansicht der Darstellung unter einem ersten Betrachtungswinkel, und eine zweite Ansicht der Darstellung unter einem zweiten Betrachtungswinkel.

Die ersten Mikrospiegel weisen mindestens eine zur Grundebene geneigte Spiegelfläche auf, sodass sie einen strukturierten Bereich der Darstellung, beispielsweise ein Motiv, darstellen. Es ist gleichermaßen auch möglich, dass die ersten Mikrospiegel mindestens zwei Motive - sogenannte Flip-Motive - unter verschiedenen Betrachtungswinkeln darstellen. Dann ist ein erstes Motiv in einer ersten Ansicht in einem ersten Betrachtungswinkelbereich sichtbar und wechselt in einer zweiten Ansicht in einem anderen, zweiten, ebenfalls definierten Betrachtungswinkelbereich in ein zweites Motiv, das ebenfalls über den gesamten Blickwinkelbereich sichtbar ist. Der Motivwechsel erfolgt bevorzugt statisch bei einem Wechsel vom ersten in den zweiten Betrachtungswinkelbereich, d.h. bei einem Wechsel vom ersten Betrachtungswinkelbereich in den zweiten Betrachtungswinkelbereich verschwindet das erste Motiv vollständig und das zweite Motiv erscheint. Es wird ein sogenanntes Flip-Bild oder Flip-Motiv dargestellt. Im ersten und im zweiten Betrachtungswinkelbereich weisen die jeweiligen Motive keinen Bewegungseffekt auf. Es ist aber gleichermaßen auch möglich, dass die Motive in den beiden Betrachtungswinkelbereichen voneinander unterschiedliche optisch variable Effekte, wie Lauf-, Wölb-, oder Paralaxe-Effekte aufweisen. Es wäre beispielsweise möglich, dass ein Laufeffekt im ersten Betrachtungswinkelbereich bei einem Wechsel in den zweiten Betrachtungswinkelbereich statisch beispielsweise in einen anderen Laufeffekt oder einen Wölbeffekt flippt. Im Sinne dieser Anmeldung wird auch von Blickwinkelbereich gesprochen. Blickwinkelbereich bezeichnet einen Winkelbereich in dem das Sicherheitselement bei senkrechter Betrachtung gekippt ist und stellt damit ein äquivalent zum Betrachtungswinkelbereich dar.

Die zweiten Mikrospiegel umfassen eine Spiegelfläche, die zweiachsig gekrümmt ist. Besonders bevorzugt umfassen die zweiten Mikrospiegel mehrere Teilspiegelflächen, welche jeweils einzeln mit dem bloßen Auge nicht wahrnehmbar sind. Die Spiegelfläche wird in derartigen Ausführungsformen von den Teilspiegelflächen gebildet, zwischen welchen sich Sprungstellen befinden, sodass die Teilspiegelflächen eine Fresnelstruktur ausbilden. Eine derartige Struktur sorgt dafür, dass die reflektiven Eigenschaften der Teilspiegelflächen und der Spiegelfläche im Wesentlichen gleich sind, in einem Prägeprozess wird aber Material eingespart, denn um dieselbe reflektive Wirkung zu erhalten, wird bei der Fresnelstruktur weniger Prägelack in der Herstellung benötigt, sodass Material eingespart und damit die Herstellkosten gesenkt werden. Es ist natürlich gleichermaßen auch möglich, dass auch die ersten Mikrospiegel mehrere Teilspiegelflächen umfassen. Weisen die zweiten Mikrospiegel mehrere Teilspiegelflächen auf, sind auch die Teilspiegelflächen zweiachsig gekrümmt. Die reflektierende Oberfläche der Spiegelfläche bzw. die reflektierenden Oberflächen der Teilspiegelflächen weisen in zwei zueinander senkrecht stehenden Richtungen jeweils eine Vielzahl von Neigungen, also einen Neigungsverlauf, auf. Die Oberfläche der Spiegelfläche bzw. die Oberflächen der Teilspiegelflächen der zweiten Mikrospiegel sind in zwei zueinander senkrecht stehenden Richtungen gekrümmt. Man kann auch von einer zweidimensionalen Wölbung der Spiegelfläche bzw. der Teilspiegelflächen sprechen. Die zweiten Mikrospiegel erzeugen einen matten bzw. glatten Effekt, wobei sie bevorzugt Pixel in einem nicht strukturierten Bereich einer Darstellung bilden. Ein derartiger nicht strukturierter Bereich wäre beispielsweise der Hintergrund einer Motivdarstellung.

Für die Spiegelfläche bzw. die Teilspiegelflächen der zweiten Mikrospiegel ist ein gleicher/vergleichbarer Blickwinkelbereich, wie er beispielsweise bei einem klassischen Flip-Hintergrund verwendet werden kann, vorgesehen. Die Krümmung in den beiden Richtungen wird dabei so gewählt, dass jedes Pixel der zweiten Mikrospiegel den gleichen Blickwinkelbereich abdeckt. Dadurch ist jedes dieser Pixel beim Kippen innerhalb dieses Blickwinkelbereichs immer sichtbar und besitzt dabei bevorzugt eine konstante Helligkeit. Wichtig ist es dabei aber, dass die Teilspiegelflächen der zweiten Mikrospiegel zweiachsig gekrümmt sind. D.h. die Teilspiegelflächen der zweiten Mikrospiegel müssen sowohl beim Kippen des Sicherheitselements in eine erste Richtung, beispielsweise in Nord-Süd-Richtung, als auch beim Kippen in eine senkrecht dazu stehende Richtung, also in diesem Beispiel in Ost-West-Richtung eine Krümmung aufweisen. Dies stellt einen wesentlichen Unterschied zu bekannten mit Mikrospiegeln erzeugten Bereichen einer Darstellung dar, deren Teilspiegelflächen eine zufällige Verkippung in Nord-Süd-Richtung und eine zufällige Verkippung in Ost-West-Richtung aufweisen - die Teilspiegelflächen weisen keinen Neigungsverlauf auf. Dies führt bei bekannten Mikrospiegelanordnungen zwar aus der Ferne betrachtet zu einem optischen Effekt, der gleichmäßig wirkt, bei genauerer Betrachtung leuchten aber die einzelnen Pixel unterschiedlich hell auf, was zu einer körnigen bzw. grieseligen Optik führt.

Die zweiten Mikrospiegel können beispielsweise als Pixel eines Flip-Hintergrunds verwendet werden. Dabei ist es wesentlich, dass die zweiten Mikrospiegel mit zweiachsig gekrümmten Spiegelflächen bzw. Teilspiegelflächen versehen sind, die aufgrund der Reflexionsschicht bzw. der Metallschicht gekrümmte Spiegel darstellen, die zum Blickwinkelbereich des Motives, das die ersten Mikrospiegel darstellen, passen, mit dem die zweiten Mikrospiegel gemeinsam aufleuchten sollen. Wird das Sicherheitselement gekippt und damit der Flip vom ersten Motiv zum zweiten Motiv vollzogen, erscheinen die zweiten Mikrospiegel stets in im Wesentlichen gleichmäßiger Helligkeit, unabhängig vom Kippwinkel des Sicherheitselements und dem daraus resultierenden Blickwinkelbereich. Auch in Flächenbereichen, in denen erste und zweite Mikrospiegel vorliegen, weisen die zweiten Mikrospiegel eine im Wesentlichen gleichmäßige Helligkeit auf. Eine im Wesentlichen gleichmäßige Helligkeit bedeutet dabei, dass die Helligkeit der zweiten Mikrospiegel zwar in ihrer Intensität variieren kann, die Helligkeit im Sichtbarkeitsbereich aber nur langsam variiert und die Helligkeitsverteilung über alle Pixel hinweg betrachtet glatt, also nicht körnig oder grieselig ist.

Eine gleichmäßige Helligkeit des nicht strukturierten Bereichs einer Darstellung, also beispielsweise des Flip-Hintergrunds wird besonders bevorzugt dadurch erreicht, dass eine Vielzahl von zweiten Mikrospiegeln die gleiche Oberflächenkrümmung in seiner Spiegelfläche bzw. in seinen Teilspiegelflächen besitzt.

Mit dem beschriebenen Sicherheitselement wird beispielsweise ein Hintergrundeffekt mit matter Optik und gleichmäßiger Helligkeit über einen bestimmten Kippwinkelbereich erzeugt. Der Hintergrundeffekt der zweiten Mikrospiegel wird beispielsweise für Flip-Motive verwendet, die mit den ersten Mikrospiegeln erzeugt werden und sorgt dabei zusätzlich dafür, dass die eingangs beschriebenen Geisterbilder überstrahlt werden und damit vom äußeren Betrachter idealerweise nicht wahrgenommen werden können. Auch dies verbessert die optische Attraktivität des Sicherheitselements.

Bevorzugt wird die erste Ansicht der Darstellung, die unter dem ersten Betrachtungswinkelbereich sichtbar ist von einer ersten Pixelgruppe gezeigt und die zweite Ansicht der Darstellung, die unter dem zweiten Betrachtungswinkelbereich sichtbar ist, von einer zweiten Pixelgruppe. Besonders bevorzugt sind dann die Mikrospiegel der beiden Pixelgruppen mindestens in einem Bereich der Mikrospiegelanordnung miteinander verschachtelt. Die jeweiligen Pixelgruppen leuchten dann nur unter einem bestimmten Betrachtungswinkel auf, wobei die erste Pixelgruppe in einem anderen Betrachtungswinkelbereich aufleuchtet, wie die zweite Pixelgruppe. Innerhalb der jeweiligen Pixelgruppe können erste Mikrospiegel und zweite Mikrospiegel gemeinsam aufleuchten.

Das gemeinsame Aufleuchten der ersten Mikrospiegel zusammen mit den zweiten Mikrospiegeln wird durch die beschriebene Verschachtelung erreicht. Bevorzugt sind dabei mindestens in einem Flächenbereich der Mikrospiegelanordnung erste Mikrospiegel der ersten Pixelgruppe und zweite Mikrospiegel der zweiten Pixelgruppe wiederholt nebeneinander angeordnet. Besonders bevorzugt erfolgt die beschriebene Verschachtelung in Form eines Schachbretts. Dann reflektieren die weißen Flächen des Schachbretts in den Betrachtungswinkeln der ersten Ansicht der Darstellung, also die ersten Mikrospiegel und die dazugehörigen zweiten Mikrospiegel mit dem gleichen Betrachtungswinkelbereich, und die schwarzen Flächen des Schachbretts in den Betrachtungswinkeln der zweiten Ansicht der Darstellung, also die ersten Mikrospiegel und die dazugehörigen zweiten Mikrospiegel mit dem gleichen Betrachtungswinkelbereich. Die ersten Mikrospiegel und die zweiten Mikrospiegel weisen den gleichen bzw. einen ähnlichen Blickwinkelbereich auf; ihre Motive/Effekte sind also in einem im Wesentlichen gleichen Blickwinkelbereich sichtbar. In der Regel unterscheiden sich die weißen und schwarzen Flächen des Schachbretts vor allem in ihrem Blickwinkelbereich in Nord-Süd-Richtung. Als Konsequenz können benachbarte Mikrospiegel auch unterschiedliche Krümmungen ihrer Spiegelflächen bzw. Teilspiegelflächen aufweisen, oder es können erste Mikrospiegel ohne Krümmung der Oberfläche ihrer Teilflächen neben zweiten Mikrospiegel mit gekrümmten Teilspiegelflächen angeordnet sein; dies resultiert eben genau aus der beschriebenen verschachtelten Anordnung.

Bevorzugt sind in mindestens einem Flächenbereich der Mikrospiegelanordnung zweite Mikrospiegel einer ersten Art der ersten Pixelgruppe und Mikrospiegel einer zweiten Art der zweiten Pixelgruppe wiederholt nebeneinander angeordnet, wobei sich die beiden Arten von zweiten Mikrospiegeln in einer Krümmung ihrer Spiegelflächen bzw. Teilspiegelflächen unterscheiden. Die jeweiligen Pixelgruppen sind auch dabei miteinander verschachtelt angeordnet, beispielsweise in Form eines Schachbrettmusters, wodurch der optische Effekt des Sicherheitselements weiter verbessert wird. In Bereichen der Darstellung, in denen keine ersten Mikrospiegel vorhanden sind, und damit kein Motiv dargestellt wird, liegen nur zweite Mikrospiegel vor. Die Spiegelflächen bzw. die Teilspiegelflächen der zweiten Mikrospiegel erster Art sind dabei ebenso wie die Spiegelflächen bzw. die Teilspiegelflächen der zweiten Mikrospiegel zweiter Art zweiachsig gekrümmt. Sie weisen Krümmungen ihrer Oberfläche in zwei zueinander senkrecht stehenden Richtungen auf.

In bevorzugten Ausführungsformen weist die Mikrospiegelanordnung eine Multilayer-Beschichtung, insbesondere eine Colourshift-Beschichtung auf. Mit derartigen Multilayer-Beschichtungen kann die Mikrospiegelanordnung einen Betrachtungswinkelabhängigen Farbeffekt erzeugen. Besonders bevorzugt können die unterschiedlichen Pixelgruppen auch unterschiedlich beschichtet sein, sodass beispielsweise ein betrachtungswinkelabhängiger Farbwechsel zwischen den beiden Ansichten erzeugt werden kann.

Bevorzugt weist mindestens eine der Spiegelflächen bzw. der Teilspiegelflächen der zweiten Mikrospiegel eine kontinuierlich gekrümmte Oberflächenform auf, besonders bevorzugt eine parabolisch gekrümmte Oberflächenform. Die Krümmung der Oberfläche der Spiegelflächen bzw. der Teilspiegelflächen in den zweiten Mikrospiegeln kann also kontinuierlich, in Form eines Bogens erfolgen, oder in diskreten Schritten mit jeweils einer konstanten Krümmung. Bei einer kontinuierlich gekrümmten Oberflächenform weist die Oberfläche bevorzugt die Form einer Parabel, also eines Polynoms 2ter Ordnung auf, da in diesem Fall die zweite Ableitung konstant ist und so alle Neigungen gleichmäßig oft vorkommen, was beim Verkippen zu einer gleichmäßigen Helligkeit führt. Es ist möglich, dass lokale Sprungstellen, beispielsweise an den Rändern, aber auch innerhalb des Pixels der Mikrospiegel, wenn beispielsweise Teilspiegelflächen vorgesehen sind, vorkommen.

In Ausführungsformen kann die gekrümmte Oberflächenform der Spiegelflächen bzw. der Teilspiegelflächen der zweiten Mikrospiegel lateral entlang ihrer Oberfläche variieren. Es ist beispielsweise möglich, dass die Krümmung lateral entlang der Oberfläche der Teilspiegelflächen zunächst konkav verläuft, dann aber in eine konvexe Krümmung übergeht (konkavkonvex) - der umgekehrte Fall (konvex-konkav) ist natürlich gleichermaßen möglich. Es können mehrere unterschiedlich ausgerichtete Parabelstücke hintereinander angeordnet werden. Die Teilflächen weisen dann eine Oberflächenform mit mindestens einer Erhebung und/oder mindestens einer Vertiefung auf. Bevorzugt weist die Oberfläche möglichst wenig lokale Sprungstellen auf, besonders bevorzugt ist die Oberflächenform stetig, besitzt also keine Sprungstellen.

Eine Tangente der Krümmung der Oberfläche der Spiegelflächen bzw. der Teilspiegelflächen der zweiten Mikrospiegel kann sich im Bereich von +/-45°, bevorzugt von +/- 20°, besonders bevorzugt von +/- 10° zur vom Substratkörper definierten Grundebene befinden. Ferner haben die ersten Mikrospiegel und/oder die zweiten Mikrospiegel bevorzugt Abmessungen zwischen 3 µm und 100 µm, besonders bevorzugt zwischen 5 µm und 20 µm. Weiter bevorzugt erstrecken sich die Spiegelflächen bzw. die Teilspiegelflächen der zweiten Mikrospiegel bis auf eine maximale Höhe zwischen 0,5 µm und 10 µm, besonders bevorzugt zwischen 1 µm und 5 µm, gemessen zwischen höchstem und tiefsten Punkt der Oberfläche.

In Ausführungsformen können die zweiten Mikrospiegel mit weiteren zur Grundebene geneigten Spiegelflächen, die Pixel im nicht strukturierten Bereich der Darstellung bilden, kombiniert sein. Hierbei werden klassische, verrauschte Mikrospiegel, die ein grieseliges Bild erzeugen, mit den zweiten Mikrospiegel, die einen gleichmäßigen Effekt im nicht strukturierten Bereich der Darstellung erzeugen, kombiniert. Sowohl die verrauschten Mikrospiegel, als auch die zweiten Mikrospiegel haben auf makroskopischer Ebene den gleichen Blickwinkelbereich und haben damit aus der Entfernung eine sehr Ähnliche optische Erscheinung. Erst aus der Nähe betrachtet, lässt sich ein optischer Unterschied zwischen den verrauschten Mikrospiegeln und den zweiten Mikrospiegeln gut erkennen. Dadurch können versteckte Motive im nicht strukturierten Bereich, beispielsweise im Hintergrund der Darstellung eingebaut werden. Beispielsweise könnte ein Himmel mit den zweiten Mikrospiegeln als Hintergrundeffekt dargestellt werden, vor dem ein Vogel, dargestellt als Flip-Motiv mit den ersten Mikrospiegeln fliegt. Ein Bereich des Himmels könnte mit verrauschten Mikrospiegeln erzeugt werden, sodass diese beispielsweise eine Wolke als grieseliges Bild im ansonsten gleichmäßigen Hintergrund darstellen. Es wären beliebige Motive denkbar, die mit den verrauschten Mikrospiegeln in den Hintergrund eingebracht werden können. Der Blickwinkelbereich kann hier zwischen den verrauschten Mikrospiegeln und den zweiten Mikrospiegeln auch bewusst unterschiedlich gewählt werden. Das Einbringen eines zusätzlichen Motivs, das aus der Ferne nicht erkennbar ist, erhöht auf überraschende Weise die Fälschungssicherheit des Sicherheitselements.

Besonders bevorzugt ist das optisch variable Sicherheitselement ein Foliensicherheitselement, wie etwa ein Sicherheitsfaden, ein Sicherheitsband oder ein Sicherheitspatch. Es kann dann problemlos als Transferelement auf ein Wertdokument appliziert oder auch in das Wertdokument eingebettet werden. Das Foliensicherheitselement kann gleichermaßen noch mit weiteren Funktionsschichten, z.B. einer maschinenlesbaren Magnetcodierung, einer UV-Lumineszenz, einer Phosphoreszenz, einer Infrarotcodierung, oder Ähnlichem ausgestattet sein.

Es ist ebenfalls ein Wertdokument, wie eine Banknote, ein Scheck, eine Kredit- oder sonstige Zahlungskarte, eine Ausweiskarte oder dergleichen, mit dem beschriebenen optisch variablen Sicherheitselement vorgesehen. Es versteht sich, dass das Wertdokument auf dieselben bereits beschriebenen Arten modifiziert werden kann, wie das optisch variable Sicherheitselement. Hier ist es gleichermaßen möglich, die beschriebene Mikrospiegelanordnung direkt auf das Wertdokument bzw. den Substratkörper des Wertdokuments zu applizieren.

Ebenfalls vorgesehen ist ein Verfahren zur Herstellung eines optisch variablen Sicherheitselements in einer der vorangegangen beschriebenen Ausführungsformen. Es wird ein eine Grundebene definierender Substratkörper bereitgestellt und eine Mikrospiegelanordnung, die als zweidimensionales Array aus Mikrospiegeln ausgebildet ist, die Pixel einer in Draufsicht auf den Substratkörper erkennbaren Darstellung bilden, wird am Substratkörper ausgebildet oder angeordnet. Die Mikrospiegelanordnung umfasst erste Mikrospiegel und zweite Mikrospiegel, wobei die ersten Mikrospiegel ebene, zur Grundebene geneigte Spiegelflächen aufweisen und mindestens die zweiten Mikrospiegel jeweils eine zweiachsig gekrümmte Spiegelfläche umfassen. Besonders bevorzugt weisen die zweiten Mikrospiegel mehrere Teilspiegelflächen auf, die zweiachsig gekrümmt sind.

Es versteht sich, dass das Verfahren zur Herstellung des oben beschriebenen optisch variablen Sicherheitselements dient und damit auf dieselben bereits beschriebenen Arten modifiziert werden kann, wie das optisch variable Sicherheitselement und das Wertdokument.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. In den Figuren zeigen:
- Fig. 1: ein Sicherheitselement mit einem verrauschten Hintergrundeffekt in der Draufsicht bei zwei unterschiedlichen Kippwinkeln,
- Fig. 2: ein Sicherheitselement mit einem gleichmäßigen Hintergrundeffekt in der Draufsicht bei zwei unterschiedlichen Kippwinkeln,
- Fig. 3A: ein erstes Detail im Sicherheitselement gemäß Fig. 1 in Graustufendarstellung in Draufsicht,
- Fig. 3B: das erste Detail gemäß Fig. 3A in Draufsicht in schematischer Darstellung,
- Fig. 4A: ein zweites Detail im Sicherheitselement gemäß Fig. 2 in Graustufendarstellung in Draufsicht,
- Fig. 4B: das zweite Detail gemäß Fig. 4A in Draufsicht in schematischer Darstellung,
- Fig. 5A: ein drittes Detail im Sicherheitselement gemäß Fig. 2 in Graustufendarstellung in Draufsicht, und
- Fig. 5B: das erste Detail gemäß Fig. 5A in Draufsicht in schematischer Darstellung,

Strukturen, die sich strukturell oder funktionell entsprechen sind in den Figuren jeweils mit dem gleichen Bezugszeichen versehen.

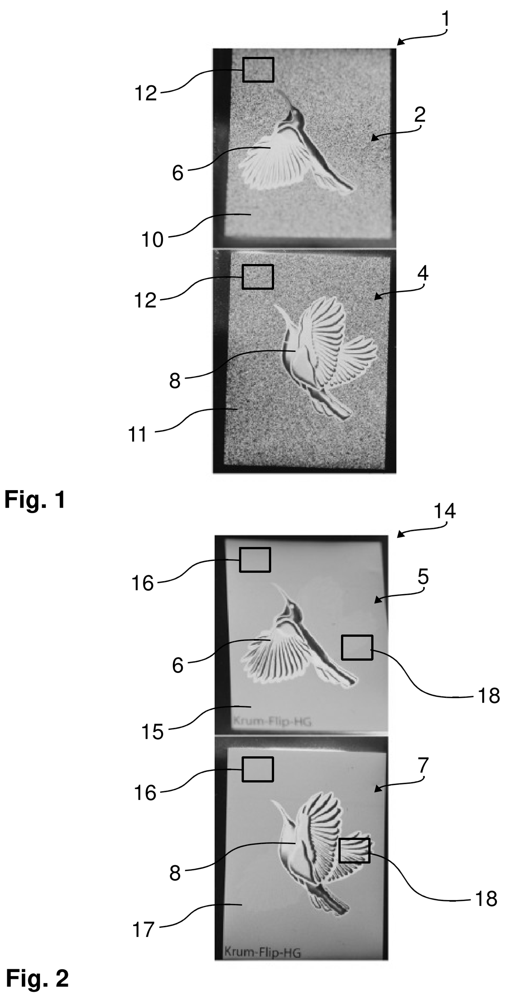

Die Fig. 1 zeigt ein erstes Sicherheitselement 1 in der Draufsicht in einer ersten Ansicht 2 bei senkrechter Betrachtung unter einem ersten Kippwinkel und in einer zweiten Ansicht 4 unter einem zweiten, unterschiedlichen Kippwinkel. Es ist ein erstes Flip-Motiv 6 und ein zweites Flip-Motiv 8 dargestellt. Ebenfalls dargestellt sind ein verrauschter Hintergrund der ersten Ansicht 10, ein verrauschter Hintergrund der zweiten Ansicht 11 und ein erstes Detail 12 im Bereich des verrauschten Hintergrunds 10, 11. Das erste Flip-Motiv 6 und der verrauschte Hintergrund der ersten Ansicht 10 stellen zusammen die erste Ansicht einer Darstellung dar und das zweite Flip-Motiv 8 und der verrauschte Hintergrund der zweiten Ansicht 11 stellen zusammen die zweite Ansicht der Darstellung dar.

Fig. 2 zeigt grundsätzlich dieselbe Darstellung wie die Fig. 1 für ein zweites Sicherheitselement 14. Das zweite Sicherheitselement 14 ist in der Draufsicht bei senkrechter Betrachtung in einer ersten Ansicht 5 unter dem ersten Kippwinkel und in einer zweiten Ansicht 7 unter dem zweiten, unterschiedlichen Kippwinkel gezeigt. Das erste Flip-Motiv 6 und das zweite Flip-Motiv 8 sind ebenfalls zu erkennen. Im Unterschied zu Fig. 1 ist in Fig. 2 ein in der ersten Ansicht 5 glatter Hintergrund 15 und ein in der zweiten Ansicht 7 glatter Hintergrund 17 vorgesehen. Im Bereich des glatten Hintergrunds 15, 17 ist ein zweites Detail 16 vorgesehen. Ebenfalls ist im Bereich des zweiten Flip-Motivs 8 (bei Betrachtung unter dem zweiten Kippwinkel) bzw. des glatten Hintergrunds 15 (bei Betrachtung unter dem ersten Kippwinkel) ein drittes Detail 18 vorgesehen. Das erste Flip-Motiv 6 und der glatte Hintergrund 15 stellen zusammen die erste Ansicht 5 einer Darstellung dar und das zweite Flip-Motiv 8 und der glatte Hintergrund 17 stellen zusammen die zweite Ansicht 7 der Darstellung dar.

Die in den Fig. 1 und 2 gezeigten Darstellungen werden durch Mikrospiegelanordnungen 19 erzeugt, welche auf die Vorderseite eines Substratkörpers aufgebracht sind. Hierbei ist es gleichermaßen möglich, dass in eine Dielektrikumschicht eine Mikrofacettenanordnung geprägt und anschließend mit einer Reflexionsschicht versehen wird, um die Mikrospiegelanordnung 19 auszubilden, oder dass die Mikrospiegelanordnung 19 gänzlich durch eine Metallschicht gebildet wird, die auf die Vorderseite des Substratkörpers aufgebracht ist.

In den Fig. 1 und 2 ist als Darstellung ein Flip-Motiv 6, 8 vor einem Hintergrund 10, 11, 15, 17 dargestellt. Es ist anstelle des Flip-Motivs 6, 8 gleichermaßen auch jede beliebige andere Darstellung möglich, die alle mit den erfindungsgemäßen zweiten Mikrospiegeln 22, 24 kombiniert werden können.

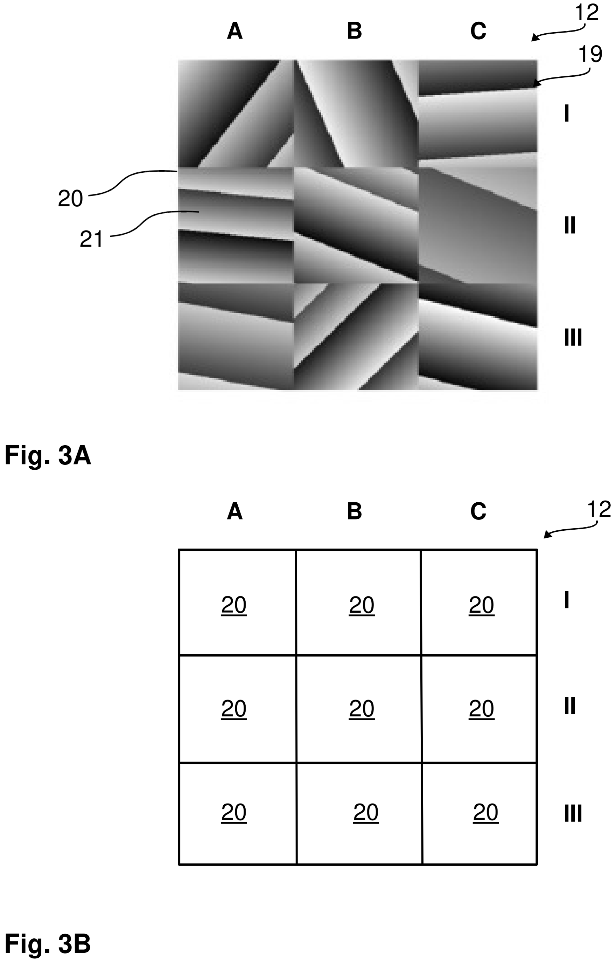

In den Fig. 3A und 3B ist das erste Detail 12 in Draufsicht dargestellt. Fig. 3A stellt eine Detailansicht der Mikrospiegelanordnung 19 des verrauschten Hintergrunds 10, 11, wie er aus dem Stand der Technik bekannt ist, als Graustufenbild dar. Im Graustufenbild der Fig. 3A sind die höchsten Bereiche der Mikrospiegelanordnung 19 weiß dargestellt und die niedrigsten Bereiche der Mikrospiegelanordnung 19 sind schwarz dargestellt. Fig. 3B stellt das erste Detail 12 gemäß Fig. 3A schematisch dar. In einer 3x3-Anordnung sind insgesamt 9 quadratische verrauschte Mikrospiegel 20 dargestellt. Die verrauschten Mikrospiegel 20 sind in Zeilen und Spalten angeordnet, wobei die Spalten mit A, B und C, und die Zeilen mit I, II und III bezeichnet sind. Es versteht sich, dass die Anzahl der verrauschten Mikrospiegel 20 nur beispielhaft und zur Veranschaulichung gewählt wurde. In der Realität weist die Mikrospiegelanordnung 19 eine Vielzahl von verrauschten Mikrospiegeln 20 auf, die auch z.B. eine rechteckige Form aufweisen können.

In den verrauschten Mikrospiegeln 20 sind mehrere Teilspiegelflächen 21 vorgesehen, die zufällig orientiert sind, sodass die Vielzahl von verrauschten Mikrospiegeln 20 gemeinsam den verrauschten Hintergrund 10, 11 ausbilden. Es zeigt sich, dass der verrauschte Hintergrund 10, 11 aus einer Vielzahl von ebenen, geneigten Teilspiegelflächen 21 besteht. Aufgrund der zufälligen Orientierung der Teilspiegelflächen 21, leuchten die verrauschten Mikrospiegel 20 unterschiedlich hell, was zu einer grieseligen Optik des verrauschten Hintergrunds 10, 11 führt.

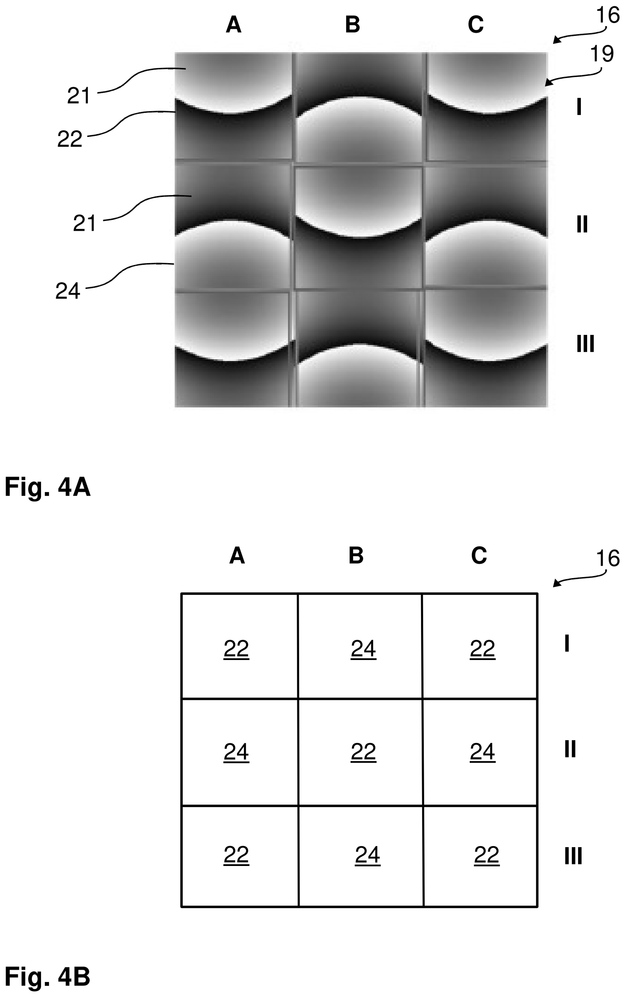

Fig. 4A und 4B zeigen das zweite Detail 16 in Draufsicht; Fig. 4A stellt eine Detailansicht des erfindungsgemäßen glatten Hintergrunds 15, 17 als Graustufenbild dar. Wie in Fig. 3A, sind im Graustufenbild der Fig. 4A die höchsten Bereiche der Mikrospiegelanordnung 19 weiß dargestellt und die niedrigsten Bereiche der Mikrospiegelanordnung 19 sind schwarz dargestellt. Fig. 4B stellt das erste Detail 12 gemäß Fig. 4A schematisch dar. Die zweiten Mikrospiegel 22, 24 sind in Zeilen und Spalten angeordnet, wobei die Spalten mit A, B und C, und die Zeilen mit I, II und III bezeichnet sind. In einer 3x3-Anordnung sind insgesamt 9 quadratische zweite Mikrospiegel erster Art 22 und zweiter Art 24 dargestellt. Die zweiten Mikrospiegel erster Art 22 sind mit den zweiten Mikrospiegeln zweiter Art 24 in Form eines Schachbretts miteinander verschachtelt. In den Feldern AI, AIII, BII, CI und CIII sind die zweiten Mikrospiegel erster Art 22 und in den Feldern AII, BI, BIII und CII sind die zweiten Mikrospiegel zweiter Art 24 angeordnet. Es versteht sich, dass die Anzahl der Felder nur beispielhaft und zur Veranschaulichung gewählt wurde. In der Realität weist die Mikrospiegelanordnung 19 eine Vielzahl von zweiten Mikrospiegeln 22, 24 auf, die auch z.B. eine rechteckige Form aufweisen können. Sie können auch auf andere Weise als in Schachbrett-Form miteinander verschachtelt sein.

Die zweiten Mikrospiegel 22, 24 weisen je zwei gegenüber einer Grundfläche mehrfach geneigte Teilspiegelflächen 21 auf; die Teilspiegelflächen 21 sind zweiachsig gekrümmt und weisen damit eine Krümmung in zwei zueinander senkrecht stehenden Richtungen auf. Zwischen den Teilspiegelflächen 21 sind Sprungstellen vorgesehen. Es versteht sich, dass die zweiten Mikrospiegel auch mehr als zwei geneigte Teilspiegelflächen 21 mit dazwischenliegenden Sprungstellen aufweisen können. Dann bilden die Teilspiegelflächen 21 eine Fresnelstruktur aus. Gleichermaßen wäre es auch möglich, dass anstelle der Teilspiegelflächen nur eine einzige zweiachsig gekrümmte Spiegelfläche vorgesehen ist. Die Teilspiegelflächen 21 sind in den zweiten Mikrospiegel erster Art 22 und den zweiten Mikrospiegeln zweiter Art 24 unterschiedlich geneigt und die Teilspiegelflächen 21 können von einem äußeren Betrachter mit dem bloßen Auge nicht wahrgenommen werden.

Das dargestellte zweidimensionale Array von zweiten Mikrospiegeln 22, 24 erzeugt einen glatten Hintergrund 15, 17, welcher unabhängig vom Kippwinkel und damit unabhängig von der Ansicht 5, 7 der Darstellung eine gleichmäßige Helligkeit aufweist und damit optisch attraktiver wirkt, als der verrauschte Hintergrund 10, 11 in den beiden Ansichten 2, 4. Der Effekt der gleichmäßigen Helligkeit wird in dieser Ausführungsform sogar noch dadurch verbessert, dass zweite Mikrospiegel erster Art 22 und zweiter Art 24 miteinander verschachtelt angeordnet sind. So können auch Geisterbilder der Flip-Motive 6, 8 gezielt überstrahlt werden, was die optische Attraktivität des Sicherheitselements 14 weiter verbessert.

Das erste Flip-Motiv 6 ist bei senkrechter Betrachtung unter dem ersten Kippwinkel in der ersten Ansicht 5 erkennbar, verschwindet aber bei senkrechter Betrachtung unter dem zweiten Kippwinkel in der zweiten Ansicht 7. Das zweite Flip-Motiv 8 ist bei senkrechter Betrachtung unter dem ersten Kippwinkel in der ersten Ansicht 5 nicht erkennbar, erscheint aber bei senkrechter Betrachtung unter dem zweiten Kippwinkel in der zweiten Ansicht 7. Beide Flip-Motive 6, 8, befinden sich räumlich gesehen auf derselben Fläche des Sicherheitselements 1, 14. Sie sind aus einer Vielzahl von ersten Mikrospiegeln 26 aufgebaut, von denen ein Teil das erste Flip-Motiv 6 und ein Teil das zweite Flip-Motiv 8 zeigt und die analog zu den dargestellten Details 12, 16 schachbrettartig miteinander verschachtelt sind, sodass je nach Kippwinkel das erste Flip-Motiv 6 oder das zweite Flip-Motiv 8 erscheint.

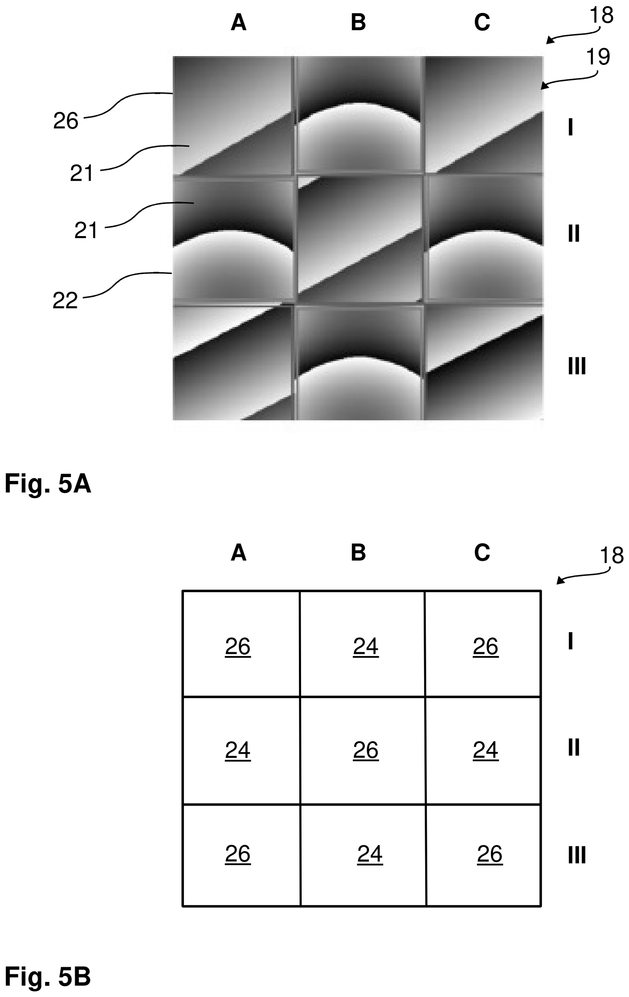

Fig. 5A und 5B zeigen das dritte Detail 18 in Draufsicht; Fig. 5A stellt eine Detailansicht von Bereichen des Sicherheitselements 14 als Graustufenbild dar, in denen der erfindungsgemäße glatte Hintergrunds 15 und das zweite Flip-Motiv 8 flächenmäßig überlappend vorliegen. Wie in den Fig. 3A und 4A, sind im Graustufenbild der Fig. 5A die höchsten Bereiche der Mikrospiegelanordnung 19 weiß dargestellt und die niedrigsten Bereiche der Mikrospiegelanordnung 19 schwarz dargestellt. Fig. 5B stellt das erste Detail 12 gemäß Fig. 5A schematisch dar. Die ersten Mikrospiegel 26 und die zweiten Mikrospiegel 24 sind in Zeilen und Spalten angeordnet, wobei die Spalten mit A, B und C, und die Zeilen mit I, II und III bezeichnet sind. In einer 3x3-Anordnung sind insgesamt 9 quadratische erste Mikrospiegel 26 und zweite Mikrospiegel 24 (zweiter Art) dargestellt. Die zweiten Mikrospiegel 24 sind mit den ersten Mikrospiegeln 26 in Form eines Schachbretts miteinander verschachtelt. In den Feldern AI, AIII, BII, CI und CIII sind die ersten Mikrospiegel 26 und in den Feldern AII, BI, BIII und CII sind die zweiten Mikrospiegel 24 angeordnet. Es versteht sich, dass diese Anzahl nur beispielhaft und zur Veranschaulichung gewählt wurde. In der Realität weist die Mikrospiegelanordnung 19 eine Vielzahl von ersten Mikrospiegeln 26 und zweiten Mikrospiegeln 24 auf, die auch z.B. eine rechteckige Form aufweisen können. Sie können auch auf andere Weise als in Schachbrett-Form miteinander verschachtelt sein. Die dargestellte Verschachtelung von zweitem Flip-Motiv 8 und glattem Hintergrund 15 sorgt auch im Bereich des Flips für einen Hintergrund mit gleichmäßiger Helligkeit, der unter dem ersten Kippwinkel sichtbar ist. Der Hintergrund 15 sorgt dafür, dass unter dem ersten Kippwinkel kein Geisterbild des zweiten Motivs 8 sichtbar ist. Dieselbe Anordnung liegt in Bereichen vor, in denen der glatte Hintergrund 17 und das erste Flip-Motiv 6 flächenmäßig überlappend vorliegen, mit dem Unterschied, dass dort erste Mikrospiegel 26 vorgesehen sind, die das erste Flip-Motiv 6 abbilden (nicht explizit dargestellt).

In einer weiteren Ausführungsform wäre es zusätzlich möglich, dass die in Fig. 3A dargestellte Struktur ein Motiv, wie beispielsweise eine Wolke, im ansonsten glatten Hintergrund 15, 17 in einer oder beider der Ansichten 5, 7 ausbildet. Dann würde man bei makroskopischer Betrachtung einen Hintergrund mit gleichmäßiger Helligkeit wahrnehmen und bei genauerer Betrachtung eine grieselig dargestellte Wolke auf einem ansonsten glatten Hintergrund 15, 17 erkennen. Dies erhöht auf überraschende Weise die Fälschungssicherheit.

### Bezugszeichenliste

- 1: erstes Sicherheitselement
- 2: erste Ansicht des ersten Sicherheitselements
- 4: zweite Ansicht des ersten Sicherheitselements
- 5: erste Ansicht des zweiten Sicherheitselements
- 6: erstes Motiv
- 7: zweite Ansicht des zweiten Sicherheitselements
- 8: zweites Motiv
- 10: verrauschter Hintergrund der ersten Ansicht
- 11: verrauschter Hintergrund der zweiten Ansicht
- 12: erstes Detail
- 14: zweites Sicherheitselement
- 15: glatter Hintergrund der ersten Ansicht
- 16: zweites Detail
- 17: glatter Hintergrund der zweiten Ansicht
- 18: drittes Detail
- 19: Mikrospiegelanordnung
- 20: verrauschte Mikrospiegel
- 21: Teilfläche
- 22: zweite Mikrospiegel erster Art
- 24: zweite Mikrospiegel zweiter Art
- 26: erste Mikrospiegel

## Patentansprüche

1. Optisch variables Sicherheitselement zur Absicherung von Sicherheitspapieren, Wertdokumenten, Wertgegenständen oder dergleichen, das aufweist:
- einen eine Grundebene definierenden Substratkörper und
- eine am Substratkörper ausgebildete oder angeordnete Mikrospiegelanordnung (19), die als zweidimensionales Array aus Mikrospiegeln (22, 24, 26) ausgebildet ist, die Pixel einer in Draufsicht auf den Substratkörper erkennbaren Darstellung (6, 8, 15, 17) bilden, wobei
- die Mikrospiegelanordnung (19) erste Mikrospiegel (26) und zweite Mikrospiegel (22, 24) umfasst, und
- die ersten Mikrospiegel (26) ebene, zur Grundebene geneigte Spiegelflächen aufweisen,
**dadurch gekennzeichnet, dass**
- die zweiten Mikrospiegel (22, 24) eine zweiachsig gekrümmte Spiegelfläche aufweisen.

2. Sicherheitselement nach Anspruch 1, **dadurch gekennzeichnet, dass** mindestens die zweiten Mikrospiegel (22, 24) jeweils mehrere Teilspiegelflächen (21) umfassen, die zweiachsig gekrümmt sind.

3. Sicherheitselement nach einem der Ansprüche 1 oder 2, **dadurch gekennzeichnet, dass** die zweiten Mikrospiegel (22, 24) Pixel in einem nicht strukturierten Bereich (15, 17) der Darstellung (6, 8, 15, 17) bilden.

4. Sicherheitselement nach einem der obigen Ansprüche, **dadurch gekennzeichnet, dass** das zweidimensionale Array aus Mikrospiegeln (22, 24, 26) eine erste Ansicht (5) der Darstellung (6, 8, 15, 17) unter einem ersten Betrachtungswinkel, und eine zweite Ansicht (7) der Darstellung (6, 8, 15, 17) unter einem zweiten Betrachtungswinkel zeigt.

5. Sicherheitselement nach Anspruch 4, **dadurch gekennzeichnet, dass** eine erste Pixelgruppe die erste Ansicht (5) und eine zweite Pixelgruppe die zweite Ansicht (7) der Darstellung (6, 8, 15, 17) zeigt.

6. Sicherheitselement nach Anspruch 5, **dadurch gekennzeichnet, dass** die Mikrospiegel (22, 24, 26) der beiden Pixelgruppen mindestens in einem Bereich der Mikrospiegelanordnung (19) miteinander verschachtelt sind.

7. Sicherheitselement nach Anspruch 6, **dadurch gekennzeichnet, dass** in mindestens einem Bereich der Mikrospiegelanordnung (19) erste Mikrospiegel (26) der ersten Pixelgruppe und zweite Mikrospiegel (22, 24) der zweiten Pixelgruppe wiederholt nebeneinander angeordnet sind.

8. Sicherheitselement nach einem der Ansprüche 6 oder 7, **dadurch gekennzeichnet, dass** in mindestens einem Bereich der Mikrospiegelanordnung (19) zweite Mikrospiegel einer ersten Art (22) der ersten Pixelgruppe und zweite Mikrospiegel einer zweiten Art (24) der zweiten Pixelgruppe wiederholt nebeneinander angeordnet sind, wobei sich die beiden Arten von zweiten Mikrospiegeln (22, 24) in einer Krümmung ihrer Spiegelflächen unterscheiden.

9. Sicherheitselement nach einem der obigen Ansprüche, **dadurch gekennzeichnet, dass** die Spiegelfläche der zweiten Mikrospiegel (22, 24) eine kontinuierlich gekrümmte oder eine parabolisch gekrümmte Oberflächenform aufweist.

10. Sicherheitselement nach einem der obigen Ansprüche, **dadurch gekennzeichnet, dass** die Oberflächenform der Spiegelfläche der zweiten Mikrospiegel (22, 24) mindestens eine Erhebung und/oder mindestens eine Vertiefung aufweist.

11. Sicherheitselement nach einem der obigen Ansprüche, **dadurch gekennzeichnet, dass** die Mikrospiegelanordnung (19) eine Reflexionsschicht, insbesondere eine Multilayer-Beschichtung aufweist.

12. Sicherheitselement nach einem der obigen Ansprüche, **dadurch gekennzeichnet, dass** sich eine Tangente der Krümmung der Oberfläche der Spiegelflächen der zweiten Mikrospiegel (22, 24) im Bereich von +/- 45°, bevorzugt von +/- 20°, besonders bevorzugt von +/- 10° zur Grundebene befindet.

13. Sicherheitselement nach einem der obigen Ansprüche, **dadurch gekennzeichnet, dass** sich die Spiegelflächen der zweiten Mikrospiegel (22, 24) senkrecht zur Grundebene gesehen eine maximale Höhenerstreckung von 0,5 µm bis 10 µm, bevorzugt von 1 µm bis 5 µm, haben.

14. Wertdokument, wie eine Banknote, ein Scheck, eine Kredit- oder sonstige Zahlungskarte, eine Ausweiskarte oder dergleichen, mit einem optisch variablen Sicherheitselement (14) nach einem der Ansprüche 1 bis 13.

15. Verfahren zur Herstellung eines optisch variablen Sicherheitselements (14) nach einem der Ansprüche 1 bis 13, bei dem
- ein eine Grundebene definierender Substratkörper bereitgestellt wird und
- eine Mikrospiegelanordnung (19), die als zweidimensionales Array aus Mikrospiegeln (22, 24, 26) ausgebildet ist, die Pixel einer in Draufsicht auf den Substratkörper erkennbaren Darstellung (6, 8, 15, 17) bilden, am Substratkörper ausgebildet oder angeordnet wird,
- wobei die Mikrospiegelanordnung (19) erste Mikrospiegel (26) und zweite Mikrospiegel (22, 24) umfasst, wobei die ersten Mikrospiegel (26) ebene, zur Grundebene geneigte Spiegelflächen aufweisen **dadurch gekennzeichnet, dass**
- die zweiten Mikrospiegel (22, 24) eine zweiachsig gekrümmte Spiegelfläche aufweisen.
